# EUROPÄISCHE PATENTSCHRIFT

(11) **EP 1 616 158 B1**
(45) Veröffentlichungstag und Bekanntmachung des Hinweises auf die Patenterteilung: **13.04.2016**
(21) Anmeldenummer: 04727848.6
(22) Anmeldetag: 16.04.2004
(51) Int. Cl.: G01J 3/457

(54) **MOBILE FERNDETEKTIONSVORRICHTUNG UND FERNDETEKTIONSVERFAHREN FÜR METHANGASANSAMMLUNGEN**
MOBILE REMOTE DETECTION DEVICE AND REMOTE DETECTION METHOD FOR METHANE ACCUMULATIONS
SYSTEME MOBILE DE DETECTION A DISTANCE ET PROCEDE DE DETECTION A DISTANCE D'AMAS DE METHANE

(30) Priorität: 24.04.2003 DE 10319560
(43) Veröffentlichungstag der Anmeldung: 18.01.2006
(73) Patentinhaber: Deutsches Zentrum für Luft- und Raumfahrt e.V., 51147 Köln (DE)
(72) Erfinder: KLINGENBERG, Hans, H., 72072 Tübingen (DE); FIX, Andreas, 82205 Gilching (DE); MAHNKE, Peter, 70195 Stuttgart-Botnang (DE); LEMMERZ, Christian, 86391 Stadtbergen (DE)
(74) Vertreter: Hoeger, Stellrecht & Partner Patentanwälte mbB
(86) Internationale Anmeldenummer: PCT/EP2004/004048
(87) Internationale Veröffentlichungsnummer: WO 2004/094968

(56) Entgegenhaltungen:
- DE-C1- 19 613 805
- US-A- 5 231 480
- MILTON M J T ET AL: "Injection-seeded optical parametric oscillator for range-resolved DIAL measurements of atmospheric methane" OPTICS COMMUNICATIONS, NORTH-HOLLAND PUBLISHING CO. AMSTERDAM, NL, Bd. 142, Nr. 1-3, 1. Oktober 1997 (1997-10-01), Seiten 153-160, XP004094057 ISSN: 0030-4018
- LEE S W ET AL: "Methane concentration measurements with a mid-infrared optical parametric oscillator-based differential absorption lidar system" 30. August 1999 (1999-08-30) , LASERS AND ELECTRO-OPTICS, 1999. CLEO/PACIFIC RIM '99. THE PACIFIC RIM CONFERENCE ON SEOUL, SOUTH KOREA 30 AUG.-3 SEPT. 1999, PISCATAWAY, NJ, USA,IEEE, US, PAGE(S) 272-273 XP010364041 ISBN: 0-7803-5661-6 das ganze Dokument
- ZIRNIG, HAUSMANN; SCHREIER: "Überwachung von Erdgastransportleitungen" GAS WASSER ABWASSER, Nr. 5, 2002, Seiten 337-344, XP002294896
- BRUNEAU D ET AL: "Double-pulse dual-wavelength alexandrite laser for atmospheric water vapor measurement", APPLIED OPTICS, OPTICAL SOCIETY OF AMERICA, WASHINGTON, DC; US, vol. 30, no. 27, 20 September 1991 (1991-09-20), pages 3930-3937, XP007904277, ISSN: 0003-6935, DOI: 10.1364/AO.30.003930
- PATI B ET AL: "A diode-pumped, Q-switched, Nd:YLF laser using a prismatic pump cavity", OSA TOPICAL MEETING ON ADVANCED SOLID-STATE PHOTONICS, XX, XX, 2 February 2003 (2003-02-02), pages 432-437, XP007904279,
- SHLOMO FASTIG ET AL: "Fresnel Lens Characterization for Potential Use in an Unpiloted Atmospheric Vehicle DIAL Receiver System", INTERNET CITATION, May 1998 (1998-05), XP007904282, Retrieved from the Internet: URL:http://ntrs.nasa.gov/search.jsp?No=70& Ne=35&N=123+4294967284+4294888848 [retrieved on 2008-03-10]

## Beschreibung

Die Erfindung betrifft eine mobile Ferndetektionsvorrichtung für Methangasansammlungen, welche zur Montage an einem Fluggerät vorgesehen ist, umfassend eine Sendereinrichtung mit einer Lichtquelle zur Erzeugung von Licht, dessen Wellenlänge mit der spektralen Signatur von Methan abgestimmt ist, wobei das Licht auf ein Meßfeld richtbar ist und wobei die Lichtquelle Licht einer ersten Wellenlänge entsprechend einer Absorptionslinie von Methan und Referenzlicht einer zweiten Wellenlänge außerhalb einer Absorptionslinie bereitstellt, eine Detektoreinrichtung zur Detektion von rückgestreutem Licht, und eine Auswertungseinrichtung.

Ferner betrifft die Erfindung ein Ferndetektionsverfahren für Methangasansammlungen, bei dem Lichtpulse von einem Fluggerät auf ein Meßfeld gerichtet werden, deren Wellenlänge mit der spektralen Signatur von Methan abgestimmt ist, und rückgestreutes Licht an dem Fluggerät detektiert wird.

Femdetektionsvorrichtungen sind in dem Artikel "Überwachung von Erdgastransportieitungen" von W. Zirnig et al. in gwa 5/2002, 82. Jahrgang beschrieben. Das genannte Verfahren wird auch als LIDAR-Verfahren (light detecting and ranging) bezeichnet.

Mit einem solchen System, welches insbesondere durch ein Fluggerät getragen ist, lassen sich Erdgasleitungen bezüglich Lecks überwachen.

In dem Artikel MILTON M J T ET AL: "Injection-seeded optical parametric oscillator for range-resolved DIAL measurements of atmospheric methane" OPTICS COMMUNICATIONS, NORTH-HOLLAND PUBLISHING CO. AMSTERDAM, NL, Bd. 142, Nr. 1-3, 1. Oktober 1997 (1997-10-01), Seiten 153-160, XP004094057 ISSN: 0030-4018 ist ein optischer parametrischer Oszillator beschrieben, welcher gepulst geseedet ist und seine Eignung für Anwendungen mit "Dual-Wavelength"-Betrieb wird untersucht.

In dem Artikel LEE S W ET AL: "Methane concentration measurements with a mid-infrared optical parametric oscillator-based differential absorption lidar system" 30. August 1999 (1999-08-30), LASERS AND ELECTRO-OPTICS, 1999. CLEO/PACIFIC RIM '99. THE PACIFIC RIM CONFERENCE ON SEOUL, SOUTH KOREA 30 AUG.-3 SEPT. 1999, PISCATAWAY, NJ, USA, IEEE, US, PAGE(S) 272-273, XP010364041 ISBN: 0-7803-5661-6 sind Methankonzentrationsmessungen mit einem DIAL-System beschrieben, welches auf einem optischen parametrischen Oszillator im mittleren Infrarotbereich basiert ist.

Davon ausgehend liegt der Erfindung die Aufgabe zugrunde, eine mobile Ferndetektionsvorrichtung der eingangs genannten Art so zu verbessern, daß sie eine hohe Meßempfindlichkeit bei kompaktem und stabilem Aufbau aufweist.

Diese Aufgabe wird bei der eingangs genannten Vorrichtung erfindungsgemäß mit den Merkmalen von Anspruch 1 gelöst.

Dadurch, daß erfindungsgemäß Licht einer Wellenlänge erzeugt wird, welche an eine bestimmte Methanabsorptionslinie angepaßt wird, welche im Bereich zwischen 3200 nm und 3300 nm liegt, ist sichergestellt, daß eine hohe Empfindlichkeit erreicht wird.

Durch Auswahl einer Wellenlänge aus dem genannten Wellenlängenbereich ist ferner sichergestellt, daß sich das rückgestreute Licht gut detektieren läßt. Insbesondere lassen sich InAs-Detektoren verwenden, da die entsprechende Wellenlänge unterhalb der Bandkante von InAs liegt. Ferner können solche Detektoren dann auch noch gekühlt werden, um ein hohes Signal-Rausch-Verhältnis zu erhalten und damit wiederum die Meßempfindlichkeit zu erhöhen.

Um eine hohe Meßemfpindlichkeit zu erreichen, ist es erforderlich, daß Lichtpulse hoher Intensität mit geringer spektralen Breite erzeugt werden. Dadurch, daß erfindungsgemäß ein geseedeter optischer parametrischer Oszillator und ein geseedeter Pumplaser vorgesehen sind, läßt sich die Lichtquelle schmalbandig betreiben, wobei sie durchstimmbar ist.

Die Lichtquelle läßt sich stabil und kompakt aufbauen, so daß sie auch an einem Fluggerät eingesetzt werden kann, bei dem typischerweise sich ändernde Temperaturen vorliegen und auch mechanische Einwirkungen wie Vibrationen vorliegen.

Die Lichtquelle stellt Licht einer ersten Wellenlänge entsprechend einer Absorptionslinie von Methan und Referenzlicht einer zweiten Wellenlänge außerhalb einer Absorptionslinie bereit. Das Referenzlicht ermöglicht die Messung von Methangasverteilungen auch sehr geringer Konzentration (Spurengasverteilungen): Es werden die Absorptionseigenschaften des zu detektierenden Methans unter Anwendung des Beer-Lambertschen-Absorptionsgesetzes ausgenutzt. Über den Referenzlichtpuls lassen sich die Einflüsse der Atmosphäre und der Rückstreuung auf das Meßsignal eliminieren. Das entsprechende Verfahren wird auch als DIAL-Verfahren bezeichnet (differential absorption lidar).

Es ist eine Lichtpulsfolge erzeugbar. Die Lichtpulsfolge weist eine bestimmte Wiederholungsrate auf. Je höher die Wiederholungsrate, desto lückenloser läßt sich bei einer Bewegung des Trägers ein Meßfeld wie beispielsweise eine Leitungstrasse überwachen. Beispielsweise ist für eine hubschraubergetragene Ferndetektionsvorrichtung eine Wiederholungsrate in der Lichtpulsfolge der Größenordnung 100 Hz vorgesehen.

Der Abstand von Absorptionslichtpuls und Referenzlichtpuls ist kleiner 300 µs. Ein solches System läßt sich vorteilhafterweise an einem Fluggerät wie einem Hubschrauber einsetzen. Bei einer typischen Reisegeschwindigkeit von 100 km/h des Fluggeräts bewegt sich dieses während 300 µs um weniger als 1 cm. Bei entsprechender Einstellung des Abstands ist also gewährleistet, daß im wesentlichen dasselbe Meßfeld beleuchtet wird und auch eine Detektion der rückgestreuten Lichtpulse ermöglicht ist.

Der Pumplaser für den optischen parametrischen Oszillator in einem Doppelpulsbetrieb ist betreibbar. Grundsätzlich ist es möglich, daß für die Absorptionslichtpulse und für die Referenzlichtpulse getrennte Pumplaser vorgesehen sind. Wenn der Pumplaser einen Doppelpulsbetrieb zuläßt, dann genügt ein Pumplaser. Die Vorrichtung läßt sich dann kompakt aufbauen und auf energieeffiziente Weise betreiben, so daß sie besonders geeignet ist zum Einsatz mit einem Fluggerät.

Insbesondere sendet die Lichtquelle Licht der Wellenlänge 3240 nm oder 3220 nm oder 3249 nm oder 3270 nm oder 3290 nm aus. Diese Wellenlängen entsprechen Absorptionslinien von Methan, wobei sich eine hohe Meßempfindlichkeit erreichen läßt. Bei diesen Linien liegt auch eine geringe Querempfindlichkeit zu atmosphärischem Wasserdampf vor. Als besonders vorteilhaft hat sich die Wellenlänge von 3240 nm erwiesen. Es lassen sich dann für die Detektoreinrichtung gekühlte InAs-Detektoren einsetzen, um so bei hoher Effizienz ein gutes Signal-Rausch-Verhältnis zu erhalten.

Günstig ist es, wenn eine Seed-Quelle des optischen parametrischen Oszillators Licht einer Seed-Wellenlänge λₛ⁻¹ = λₚ⁻¹ - λₗ⁻¹ erzeugt, wobei λₚ die Wellenlänge des Pumplasers des optischen parametrischen Oszillators ist und λₗ eine Absorptionswellenlänge von Methan. Insbesondere ist λₗ die Idler-Wellenlänge. Es ergibt sich dadurch der Vorteil, daß bezogen auf den oben genannten Wellenlängenbereich Seed-Wellenlängen im Bereich um 1600 nm liegen können. In diesen Wellenlängenbereich, der für die Telekommunikation von Interesse ist, existieren hochwertige schmalbandige Diodenlaser mit DBR- oder DFB-Struktur oder mit externem Resonator. Es lassen sich dann existierende Diodenlaser als Seed-Quellen für den optischen parametrischen Oszillator einsetzen.

Der optische parametrische Oszillator ist an eine Sendeoptik mittels eines Lichtfaserleiters gekoppelt. Dadurch läßt sich die Lichtquelle und die Sendeoptik räumlich trennen, so daß beispielsweise die Lichtquelle in einem Innenraum eines Hubschraubers angeordnet werden kann, während die Sendeoptik an einer Außenseite des Hubschraubers montierbar ist. Dadurch wiederum ergibt sich eine einfache Möglichkeit bezüglich einer starren räumlichen Kopplung der Senderichtung der Sendereinrichtung und der Blickrichtung der Detektoreinrichtung. Es läßt sich dadurch auch eine mechanische Entkopplung zwischen Lichtquelle und Sendeoptik erreichen, so daß der Einfluß von Temperaturschwankungen, Vibrationen und dergleichen verringerbar ist.

Ganz besonders vorteilhaft ist es, wenn der Lichtfaserleiter Saphirfasern aufweist. Bei den relevanten Wellenlängen weisen Saphfrfasern eine hohe Transmission bei einer hohen optischen Zerstörschwelle auf.

Als vorteilhaft erweist es sich, wenn der Pumplaser ein gütegeschalteter Festkörperlaser wie beispielsweise ein Nd:YAG-Laser ist. Mittels eines solchen Pumplasers läßt sich schmalbandiges Sendelicht der gewünschten Wellenlänge erzeugen.

Es ist notwendig, daß der zeitliche Abstand eines Absorptionslichtpulses mit einer Absorptionswellenlänge und eines Referenzlichtpulses mit einer Nichtabsorptionswellenlänge so gewählt ist, daß unter Berücksichtigung einer Bewegungsgeschwindigkeit eines Trägers für die Vorrichtung eine räumliche Überlappung zwischen den von einem Absorptionslichtpuls beleuchteten Meßfeld und dem von einem zeitlich beabstandeten Referenzlichtpuls beleuchteten Meßfeld vorliegt. Dadurch wird gewährleistet, daß der Absorptionslichtpuls und der zugehörige Referenzlichtpuls das gleiche Meßfeld abtasten und so eben der Referenzlichtpuls überhaupt als Referenz wirken kann.

Beispielsweise ist der Pumplaser diodengepumpt, wobei zur Erzeugung von Doppelpulsen eine Güteschaltung während eines Diodenpumppulses mindestens zweimal schaltbar ist. Auf diese Weise läßt sich der optische parametrische Oszillator mit einem Doppelpuls pulsen, was wiederum dazu führen, daß das Sendelicht des optischen parametrischen Oszillators einen Doppelpuls in der ausgesandten Lichtpulsfolge umfaßt; der erste Lichtpuls ist dabei der Absorptionslichtpuls und der zweite Lichtputs ist der Referenzlichtpuls oder umgekehrt.

Günstig ist es, wenn die Lichtquelle durchstimmbar ist in einem Wellenlängenbereich um ca. 3240 nm.

Eine hohe Meßempfindlichkeit läßt sich erreichen, wenn die spektrale Breite des von der Lichtquelle erzeugten Lichts wesentlich kleiner ist als die Linienbreite der entsprechenden Methanabsorptionslinie.

Vorzugsweise ist ein Detektor der Detektoreinrichtung gekühlt, so daß ein hohes Signal-Rausch-Verhältnis vorliegt. Insbesondere ist der Detektor thermoelektrisch beispielsweise mittels eines oder mehreren Peltierelementen gekühlt. Dadurch muß kein Kältemittel wie Stickstoff mit der Vorrichtung transportiert werden.

Eine hohe Meßempfindlichkeit wird erreicht, wenn die Detektoreinrichtung einen oder mehrere InAs-Detektoren umfaßt. Die Bandkante von InAs liegt bei ca. 3300 nm. Durch die erfindungsgemäße Auswahl der Wellenlänge unterhalb dieser Bandkante für die Absorptionslichtpulse ist erreicht, daß eine hohe Ausbeute (Effizienz) vorliegt. Bei InAs-Detektoren läßt sich eine gute Ausbeute auch ohne Stickstoffkühlung erreichen. Beispielsweise wird thermoelektrisch bis zu einer Temperatur von ca. -40°C gekühlt. Dadurch kann die Vorrichtung kompakt aufgebaut werden.

Zur Fokussierung des empfangenen Lichts kann es vorgesehen sein, daß dje Detektoreinrichtung ein Teleskop umfaßt.

Es ist auch möglich, daß zur Fokussierung eine Fresnel-Linse vorgesehen ist. Fresnel-Linsen haben den Vorteil, daß sie leicht sind, kostengünstig sind und eine kürzere Baulänge für die Empfängeroptik der Detektionseinrichtung erlauben. Diese Vorteile sind besonders relevant für eine mobile Ferndetektionseinrichtung. Es existieren Materialien, die eine hohe Transmission bei den relevanten Wellenlängenbereichen aufweisen.

Ganz besonders vorteilhaft ist es, wenn eine Entfernungsmeßeinrichtung vorgesehen ist. Über eine solche Entfernungsmeßeinrichtung läßt sich eine Säule des natürlichen Methanhintergrunds ermitteln; dadurch läßt sich dann das Meßsignal korrigieren, um so wiederum eine hohe Meßempfindlichkeit zu erhalten.

Grundsätzlich ist es möglich, eine getrennte Entfernungsmeßeinrichtung vorzusehen, welche beispielsweise einen Laserentfernungsmesser umfaßt. Ganz besonders vorteilhaft ist es jedoch, wenn eine zeitaufgelöste Messung bezüglich der Laufzeit von Lichtpulsen zwischen Aussendung und Empfang von Reflexionslichtpulsen vorgesehen ist. Dadurch wird die Entfernungsmessung automatisch genau an der Stelle durchgeführt, an welcher auch die Methangasmessung durchgeführt wird.

Die erfindungsgemäße Vorrichtung ist zur Montage an einem Fluggerät und insbesondere einem Hubschrauber vorgesehen.

Der Erfindung liegt ferner die Aufgabe zugrunde, das eingangs genannte Verfahren derart zu verbessern, daß sich eine hohe Meßempfindlichkeit erreichen läßt.

Diese Aufgabe wird erfindungsgemäß mit den Merkmalen von Anspruch 19 gelöst.

Das erfindungsgemäße Ferndetektionsverfahren für Methangasansammlungen weist die bereits im Zusammenhang mit der erfindungsgemäßen Vorrichtung erläuterten Vorteile auf.

Weitere vorteilhafte Ausgestaltungen wurden ebenfalls bereits im Zusammenhang mit der erfindungsgemäßen Vorrichtung erläutert.

Die nachfolgende Beschreibung bevorzugter Ausführungsformen dient im Zusammenhang mit deriZeichnung der näheren Erläuterung der Erfindung. Es zeigen:
- Figur 1: eine schematische Garstellung einer Ferndetektionsvorrichtung für Gasansammlungen zur Erläuterung des LIDAR-Verfahrens und des DIAL-Verfahrens;
- Figur 2: eine schematische Blockbilddarstellung eines Ausführungsbeispiels einer erfindungsgemäßen Ferndetektionsvorrichtung;
- Figur 3: die berechnete Transmission von atmosphärischem Wasserdampf in einer Standard-Atmosphäre bei 300 m Weglänge im Wellenlängenbereich zwischen 3200 nm und 3300 nm (linke Skala) und den Absorptionsquerschnitt von Methan in diesem Wellenlängenbereich (rechte Skala) - die nutzbaren Absorptions-Wellenlängen sind durch Pfeile angedeutet;
- Figur 4: eine schematische Darstellung des zeitlichen Pulsverlaufs des Sendelichts;
- Figur 5: eine schematische Darstellung eines Einsatzbeispiels für die erfindungsgemäße Vorrichtung;
- Figur 6: den zeitlichen Ablauf von Pulsen zur Entfernungsmessung;
- Figur 7: eine schematische Darstellung einer Fresnel-Linse und
- Figur 8: die Transmission des Materials Poly IR^{®} 5 als Material für eine Fresnel-Linse in Abhängigkeit der Wellenlänge.

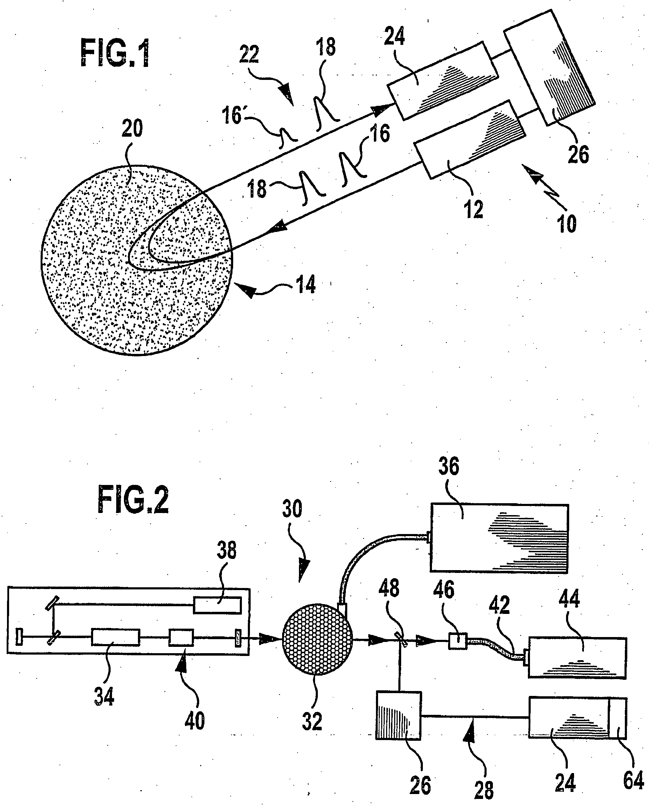

Eine Ferndetektionsvorrichtung gemäß der Erfindung, welche in Figur 1 schematisch gezeigt und dort als Ganzes mit 10 bezeichnet ist, umfaßt eine Sendereinrichtung 12 für Laserlicht mit einer entsprechenden Sendeoptik, durch die das Licht auf ein Meßfeld 14 richtbar ist.

Die Sendereinrichtung 12 umfaßt, wie unten noch näher beschrieben wird, eine Lichtquelle, welche Laserlichtpulse 16, 18 aussendet. Die Wellenlänge dieser Lichtpulse 16, 18 ist dabei auf die spektrale Signatur des zu detektierenden Gases, im Falle der vorliegenden Erfindung Methan, abgestimmt. Von einer Methangasansammlung 20 rückgestreutes Licht 22 wird von einer Detektoreinrichtung 24 mit Empfängeroptik erfaßt. Zur Auswertung ist eine Auswertungseinrichtung 26 vorgesehen, welche mit der Sendereinrichtung 12 und insbesondere einer Steuereinrichtung der Sendereinrichtung 12 in Verbindung steht und welche für eine Analyse der Meßergebnisse sorgt.

Die Detektoreinrichtung 24 ist dabei bezogen auf die Richtung des von der Sendereinrichtung 12 ausgesandten Sendelichts starr gekoppelt.

Ein solches auf Laserlicht basierendes, aktives optisches Ortungsverfahren, bei dem rückgestreutes Licht nachgewiesen und analysiert wird, wird auch als LIDAR-Verfahren bezeichnet (LIDAR - light detecting and ranging).

Bei dem DIAL-Verfahren (differential absorption lidar) werden die Absorptionseigenschaften des zu detektierenden Gases unter Anwendung des Beer-Lambertschen-Absorptionsgesetzes genutzt. Es werden Lichtpulse 16, 18 unterschiedlicher Wellenlängen ausgesandt: Der Lichtpuls 16, welcher auch als On-Line-Puls bezeichnet wird, weist eine Wellenlänge auf, welche einer Absorptionswellenlänge des zu detektierenden Gases entspricht. Das entsprechende Licht wird von dem Gas absorbiert. Der zeitlich versetzt ausgesandte Lichtpuls 18 dagegen weist eine Wellenlänge auf, bei der das Licht nicht absorbiert wird. Der Lichtpuls 18 wird auch als Off-Line-Lichtpuls bezeichnet. Er dient als Referenzpuls. Der Referenzpuls kann auch vor dem Absorptionspuls ausgesandt werden.

Das LIDAR-Verfahren und das DIAL-Verfahren sind in Abschnitt 15.2.2 in W. Demtröder, Laser-Spectroscopy, Corrected Printing 1998, Springer-Verlag im Zusammenhang mit atmosphärischen Messungen beschrieben. Es wird ausdrücklich Bezug auf diese Veröffentlichung genommen.

Ist im Meßfeld 14 zu detektierendes Gas vorhanden, dann ist rückreflektiertes Licht 16', welches auf den Lichtpuls 16 zurückgeht, aufgrund von Absorption in der Gasansammlung 20 im Vergleich zu dem Sende-Lichtpuls 16 abgeschwächt. Ein rückreflektierter Referenzlichtpuls 18' ist dagegen weit weniger abgeschwächt. Durch einen Intensitätsvergleich läßt sich das Produkt aus Gaskonzentration und Absorptionsquerschnitt ermitteln.

Ein Ausführungsbeispiel einer erfindungsgemäßen Ferndetektionsvorrichtung, welche in Figur 2 als Ganzes mit 28 bezeichnet ist, umfaßt als Teil der Sendereinrichtung 12 eine Lichtquelle 30, bei der es sich insbesondere um eine Laserlichtquelle handelt. Die Lichtquelle 30 umfaßt einen optischen parametrischen Oszillator 32 (OPO). Ein OPO ist ein nichtlineares optisches System, mit dem sich kontinuierlich frequenzveränderliche Strahlung erzeugen läßt. Ein OPO umfaßt ein geeignetes optisch nichtlineares Medium, wie beispielsweise einen nichtlinearen Kristall, welches in einem optischen Resonator angeordnet ist. Der OPO ist mittels eines Pumplasers 34 gepumpt. Die Wechselwirkung zwischen der Strahlung des kohärenten Pumpfeldes des Pumplasers 34 und der nichtlinearen Suszeptibilität beispielsweise des Kristalls erzeugt zwei frequenzveränderliche Wellen; diese werden als Signalwelle und Idlerwelle bezeichnet. Die Wellenlängen sind durch Energieerhaltung und Impulserhaltung in Form einer Phasenanpassungsbedingung bestimmt. Die Frequenzveränderlichkeit wird durch eine geeignete Änderung der Phasenanpassungsbedingung erreicht.

Geeignete optische Kristalle sind beispielsweise LiNbO₃, KTP, KTA, KNbO₃ oder Materialien mit Quasiphasenanpassung.

Der OPO ist über einen Seed-Laser 36 geseedet. Bei der Seed-Injektion (injection seeding) wird schmalbandige, kohärente Strahlung einer externen Lichtquelle (Seed-Quelle) in den OPO 32 eingekoppelt. Es handelt sich um ein bekanntes Verfahren, welches beispielsweise in der Veröffentlichung von A. Fix, "Untersuchung der spektralen Eigenschaften von optischen parametrischen Oszillatoren aus dem optisch nicht linearen Material Betabariumborat", Dissertation, Universität Kaiserslautern, Verlag Schaker Aachen 1995, beschrieben ist.

Durch Seeden läßt sich die Linienbreite eines gepulsten OPO's reduzieren, ohne daß die Verluste im OPO-Resonator stark erhöht werden. Die Effizienz des OPO wird durch Seeden nicht verringert, wobei sich die schmale Linienbreite mit einem einfachen Aufbau erzielen läßt. Bezüglich der Seed-Quelle bestehen nur geringe Anforderungen an deren Strahlungsintensität.

Für einen durchstimmbaren OPO muß die Seed-Quelle 34 durchstimmbar sein.

Bei dem Pumplaser 34 für den OPO handelt es sich vorzugsweise um einen gütegeschalteten Festkörperlaser wie beispielsweise ein Nd:YAG-Laser. Erfindungsgemäß ist es vorgesehen, daß auch der Pumplaser 34 geseedet ist und dazu als Seed-Quelle 38 einen Seed-Laser umfaßt.

Der Pumplaser 34 stellt Pumppulse bereit, um die Lichtpulse 16, 18 zu erzeugen.

Um die On-Line-Pulse 16 und die Off-Line-Pulse 18 zu erzeugen, können grundsätzlich zwei unterschiedliche Pumplaser vorgesehen sein.

Erfindungsgemäß ist ein einziger Pumplaser 34 vorgesehen, welcher einen Doppelpulsbetrieb zuläßt. Dazu ist beispielsweise eine Güteschaltung 40 des Pumplasers 34, welche beispielsweise eine Pockels-Zelle umfaßt, so ausgebildet, daß sich in einem zeitlichen Abstand Pumppulse erzeugen lassen, welche dann die Lichtpulse 16, 18 im OPO 32 erzeugen.

Beispielsweise ist der Pumplaser 34 diodengepumpt mit einem Dioden-Pumppuls einer Länge von beispielsweise 400 µs. Während eines solchen Dioden-Pumppulses wird die Güteschaltung zweimal geschaltet, um zwei Pumppulse des Pumplasers 34 zu erzeugen, welche dann in den OPO 32 eingekoppelt werden. Beispielsweise wird die Güteschaltung in einem zeitlichen Abstand von 200 µs betätigt, um entsprechend zeitlich beabstandet Pulse zu erzeugen. Die Pumppulse des Pumplasers 34 weisen die gleiche Wellenlänge auf.

Durch das Vorsehen eines einzigen Pumplasers 34, welcher einen Doppelpulsbetrieb zuläßt, läßt sich die Vorrichtung 28 kompakter aufbauen, da kein zweiter Pumplaser vorgesehen werden muß. Darüber hinaus läßt sich die Stromaufnahme der Vorrichtung verringern, da eben kein zweiter Pumplaser vorhanden ist.

Der OPO 32 wird entsprechend den Pumppulsen des Pumplasers 34 zeitlich zugeschaltet, um die On-Line-Pulse und Off-Line-Pulse unterschiedlicher Wellenlänge zu erzeugen. Beispielsweise wird dazu der Seed-Laser 36 entsprechend gesteuert geschaltet, d. h. der OPO wird zur Erzeugung von Absorptionslicht und Referenzlicht mit Seed-Licht unterschiedlicher Wellenlänge geseedet.

Das vom OPO 32 erzeugte Licht, d. h. die Lichtpulse 16, 18, die in einer Lichtpulsfolge erzeugt werden, wird über einen Lichtfaserleiter 42 zu einer Sendeoptik 44 übertragen. Mittels der Sendeoptik 44 läßt sich das Laserlicht (d. h. die Lichtpulsfolge mit den Lichtpulsen 16, 18) auf das Meßfeld 14 richten.

Durch den Lichtfaserleiter 42 läßt sich die Lichtquelle 30 räumlich von der Sendeoptik 44 trennen. Dadurch ist es möglich, wenn die Vorrichtung 24 beispielsweise durch einen Hubschrauber getragen ist, die Lichtquelle 30 in dem Hubschrauber anzuordnen, während die Sendeoptik 44 als Außenlast an dem Hubschrauber montierbar ist. Dadurch lassen sich die mechanischen Anforderungen für die Montage an dem Hubschrauber reduzieren. Es muß dabei auch berücksichtigt werden, daß die Detektoreinrichtung 24 für rückgestreutes Licht in der Nähe der Sendeoptik 44 angeordnet werden muß.

Für den Lichtfaserleiter 42 sind bei den unten noch näher erläuterten Wellenlängen Saphirfasern besonders geeignet. Der entsprechende Lichtfaserleiter 42 weist eine hohe Transmission mit hoher optischer Zerstörschwelle auf. Dadurch läßt sich das Sendelicht der Lichtquelle 30 ohne Defekte einkoppeln.

Zwischen dem OPO 32 und einer Einkopplungsstelle 46 für Laserlicht in den Lichtfaserleiter 42 ist ein Strahlteiler 48 angeordnet. Über diesen läßt sich ein Teilstrahl des vom OPO 32 ausgekoppelten Lichts zu der Auswertungseinrichtung 26 führen, um für die Analyse des rückgestreuten Lichts 22 eine Referenz für das Sendelicht bereitzustellen.

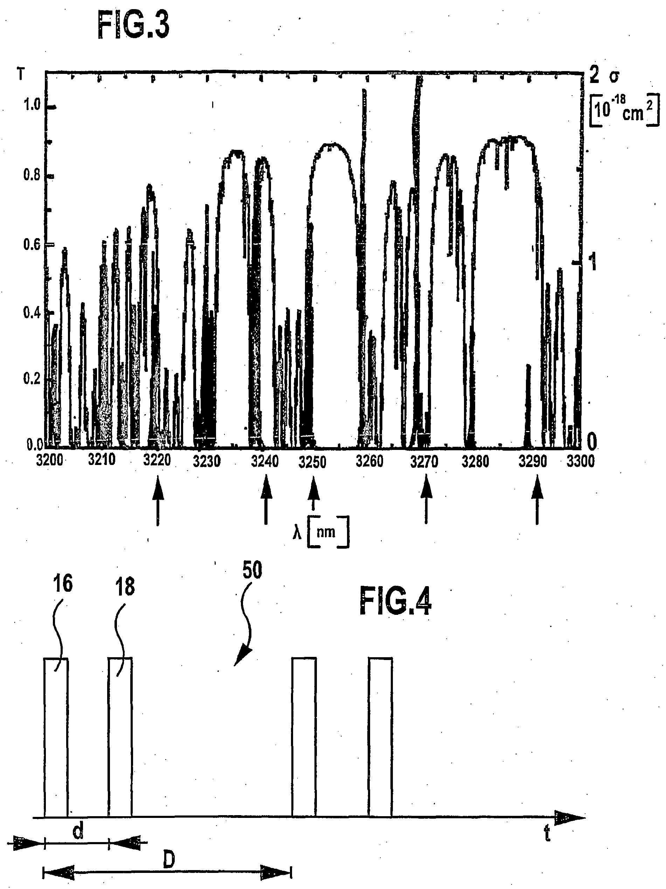

Erfindungsgemäß ist es vorgesehen, daß die On-Line-Wellenlänge der Lichtpulse 16 einer Äbsorptions-Wellenlänge von Methan entspricht, wobei diese Wellenlänge zwischen 3200 nm und 3300 nm liegt. In Figur 3 ist ein Absorptionsspektrum von Methan gezeigt. Die Absorptionslinien in dem genannten Bereich, welche eine geringe Querempfindlichkeit zu Wasserdampf aufweisen, sind über Pfeile markiert. Die Linie, die erfindungsgemäß verwendet wird, liegt bei 3239,7 nm oder 3220,1 nm oder 3249,4 nm oder 3269,5 nm oder 3290,2 nm. Bei diesen Wellenlängen ist die Transmission von atmosphärischem Wasserdampf relativ hoch, so daß eine geringe Querempfindlichkeit zu Wasserdampf vorliegt.

Es wird erwartet, daß bei einer On-Line-Wellenlänge von 3239,7 nm für eine hubschraubergetragene Vorrichtung Methan aus 80 m bis 140 m mit Ausströmraten von 10 bis 200 l/h nachweisbar ist.

Für die On-Line-Wellenlängen gemäß den genannten Vorgaben existieren entsprechende Detektoren, über die rückgestreutes Licht 22 mit ausreichender Empfindlichkeit detektierbar ist. Insbesondere lassen sich Peltier-gekühlte InAs-Detektoren einsetzen. Diese sind effizient und rauscharm. Die Bandkante von InAs liegt in der Nähe von 3300 nm. Dadurch, daß Absorptionslinien unter 3300 nm gewählt werden, ist eine hohe Effizienz sichergestellt.

Die Bandkante von InAs-Detektoren wandert mit niedrigeren Temperaturen zu kleineren Wellenlängen. Bei niedrigeren Temperaturen verringert sich das Rauschen des Detektors. Bei der genannten Wellenlänge von 3239,7 nm erhält man eine hohe Effizienz mit geringer Rauscharmut, da sich der Detektor kühlen läßt (beispielsweise thermoelektrisch mittels Peltier-Kühlung), wobei ein genügender Abstand zu der Bandkante eingehalten ist.

Die Off-Line-Wellenlänge liegt in der Nähe der entsprechenden On-Line-Wellenlänge, wobei sie außerhalb einer Absorptionslinie liegen muß. Vorteilhaft ist es, wenn im Vergleich zu der On-Line-Wellenlänge eine hohe differentielle Absorption besteht.

Durch die erfindungsgemäße Lichtquelle 30 lassen sich On-Line-Lichtpulse 16 mit einer der oben genannten Wellenlängen und entsprechende Off-Line-Lichtpulse 18 erzeugen.

Vorteilhaft ist es, wenn der Lichtpuls mit der On-Line-Wellenlänge auf der Idler-Wellenlänge λₗ erzeugt wird und das Seeding auf der Signalwellenlänge λₛ durchgeführt wird. Für die Signalwellenlänge gilt dann die Beziehung λₛ⁻¹ = λₚ⁻¹ - λₗ⁻¹, wobei λₚ die Wellenlänge des Pumplasers 34 ist. Bei dieser Verfahrensdurchführung liegt die Seedwellenlänge im Bereich von 1600 nm. In dem entsprechenden Wellenlängenbereich existieren hochwertige, schmalbandige Diodenlaser mit DBR-Struktur oder DFB-Struktur oder mit externem Resonator, so daß der konstruktive Aufwand für den Seed-Laser 36 minimiert ist.

Es läßt sich dabei schmalbandiges Laserlicht hoher Intensität erzeugen. Es läßt sich eine Meßempfindlichkeit von 50 ppm x m oder besser erzielen.

In Figur 4 ist schematisch eine Lichtpulsfolge 48 gezeigt. Ein zeitlicher Abstand d zwischen einem On-Line-Lichtpuls 16 und einem Off-Line-Lichtpuls 18 ist dabei dadurch bestimmt, daß eine Beaufschlagungsbereich des Meßfelds 14 jeweils der beiden Lichtpulse 16, 18 überlappen und möglichst weitgehend überlappen soll. Wenn ein Träger der Vorrichtung 28 beweglich ist, wie beispielsweise ein Hubschrauber, der über eine Erdgasleitung fliegt, dann beaufschlagen die Lichtpulse 16, 18 unterschiedliche Raumgebiete. Die Lichtpulse 18' können nicht mehr als Referenzpulse dienen, wenn sie von einem Beaufschlagungsbereich stammen, welcher von dem Beaufschlagungsbereich der Lichtpulse 16 verschieden ist.

Ein vorteilhafter Zeitabstand zwischen den Lichtpulsen 16, 18 liegt in der Größenordnung 200 µs bis 300 µs. Bewegt sich beispielsweise ein Hubschrauber mit einer Geschwindigkeit von 100 km/h, dann bewegt sich dieser Hubschrauber in einer Zeit von 300 µs um eine Strecke von ca. 1 cm fort. Bei einer solchen Distanz ist auch bezüglich der Detektoreinrichtung 24 ein genügender Überlapp gewährleistet.

Ein Abstand D der On-Line-Pulse 16 in der Lichtpulsfolge 48 liegt typischerweise in der Größenordnung von 10 ms, was einer Wiederholungsrate von 100 Hz entspricht. Fliegt der Hubschrauber beispielsweise mit einer Geschwindigkeit von 100 km/h, dann bewegt er sich während 10 ms um ca. 30 cm fort. Durch eine Wiederholrate von 100 Hz ist somit gewährleistet, daß ein Meßfeld längs der Flugstrecke des Hubschraubers, beispielsweise längs einer Leitungstrasse, weitgehend vollständig überdeckbar ist.

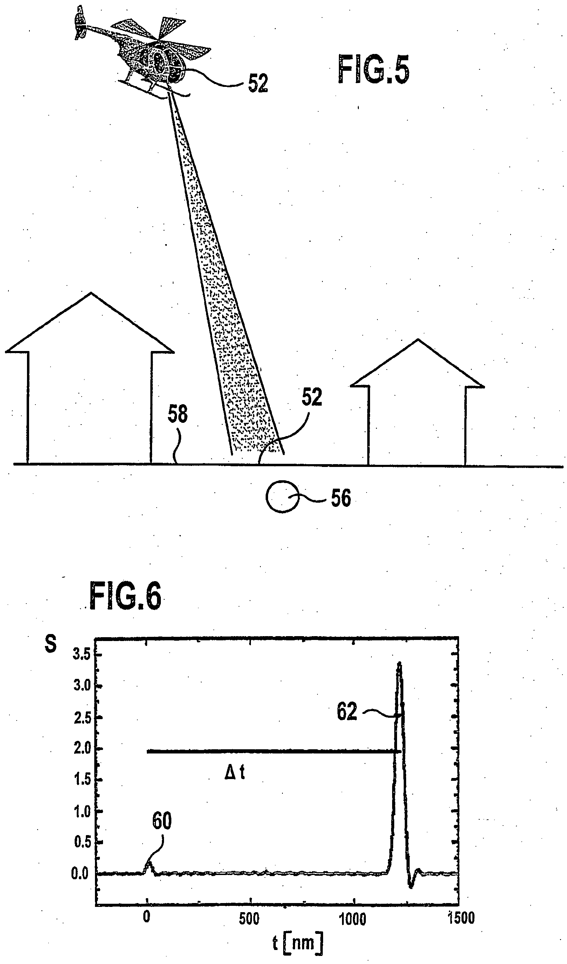

In Figur 5 ist schematisch ein Hubschrauber 52 als Fluggerät gezeigt, welches die erfindungsgemäße Ferndetektionsvorrichtung 28 trägt. Der Hubschrauber 52 fliegt längs einer Leitungstrasse 54 mit einer oder mehreren Erdgasleitungen 56. Durch Lecks in der Erdgasleitung 56 können sich über dieser Methangasansammlungen 20 bilden.

Die Sendeoptik 44 richtet das Sendelicht in einem Sendestrahl auf die Leitungstrasse 54 und die Detektoreinrichtung 24 empfängt das rückgestreute Licht 22.

Erfindungsgemäß ist es vorgesehen, daß eine Entfernungsmessung durchgeführt wird. Dadurch wird es ermöglicht, den natürlichen Methanhintergrund in seiner Auswirkung auf das Meßergebnis zu ermitteln und das Meßergebnis dann entsprechend korrigieren zu können. Über eine Entfernungsmessung läßt sich die Säule des natürlichen Methanhintergrunds in dem Beaufschlagungsbereich des Meßfelds 14 ermitteln.

Grundsätzlich ist es möglich, eine separate Entfernungsmeßeinrichtung vorzusehen, wie beispielsweise einen Laserentfernungsmesser. Es ist auch möglich, über ein Navigationssystem in Verbindung mit vorgespeicherten Geländemodellen eine Entfernungsermittlung durchzuführen.

Erfindungsgemäß ist eine Entfernungsmeßeinrichtung vorgesehen, welche zeitaufgelöst die vom Boden 58 (Figur 5) reflektierten Lichtpulse mißt. Es ist eine Empfängereinrichtung vorgesehen, welche in die Detektoreinrichtung 24 integriert ist, welche eine solche Bandbreite aufweist, daß die reflektierten Pulse zeitlich auflösbar sind. Die Entfernungsmessung erfolgt dabei erfindungsgemäß automatisch an der Stelle, an der auch bezüglich einer Methangasansammlung 20 gemessen wird.

Ein entsprechendes Zeitablaufschema ist in Figur 6 gezeigt: Ein Nahfeldsignal 60 triggert die Entfernungsmessung. Dieses Nahfeldsignal 60 wird beispielsweise über das Sendelicht 16 erhalten, wobei eine Auskopplung über den Strahlteiler 48 erfolgt.

Die Auswertungseinrichtung 26 ermittelt dann die Zeitdauer Δt, bis ein rückreflektiertes Bodensignal 62 eintrifft. Aus dieser Zeitdifferenz läßt sich dann die Entfernung ermitteln. Bei dem in Figur 6 gezeigten Ausführungsbeispiel beträgt die Laufzeit 1204 ns, woraus sich eine Entfernung von 180 m zwischen Sendeoptik 44 und Boden 58 ergibt.

Zur Fokussierung des empfangenen Lichts weist die Detektoreinrichtung 24 beispielsweise ein Teleskop auf.

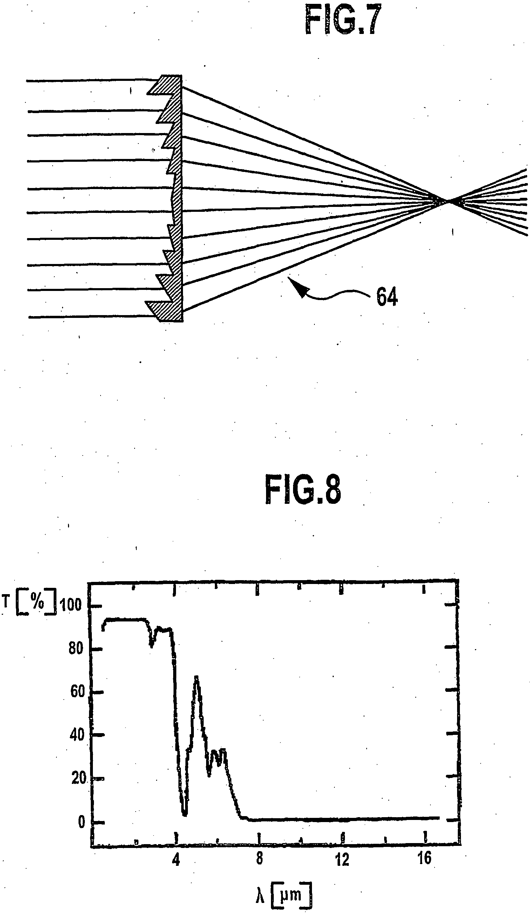

Es kann auch vorgesehen sein, daß zur Fokussierung eine Fresnel-Linse 64 vorgesehen ist. Eine solche Fresnel-Linse ist schematisch in Figur 7 gezeigt. Sie weist eine lichtbrechende Struktur auf, welche so ausgestaltet ist, daß für durchgehendes Licht ein Fokussierungseffekt eintritt. Fresnel-Linsen weisen gegenüber Teleskopen den Vorteil auf, daß sie leicht sind, kostengünstiger herstellbar sind und kürzere Baulängen für die Empfangsoptik der Detektoreinrichtung 24 erlauben. Diese Vorteile sind sehr relevant bei einem mobilen und insbesondere fluggerätgestützten Einsatz der erfindungsgemäßen Ferndetektionsvorrichtung 28.

In dem Wellenlängenbereich zwischen 3200 nm und 3300 nm ist der solare Hintergrund um ca. zwei Größenordnungen kleiner als im sichtbaren Spektralbereich. Dadurch erhält man im Gegensatz zum sichtbaren Spektralbereich ein auch unter Berücksichtigung des solaren Hintergrunds gutes Signal-Rausch-Verhältnis für eine Fresnel-Linse.

Es existieren Materialien, die in dem relevanten Spektralbereich zwischen 3200 nm und 3300 nm eine genügend hohe Transmission aufweisen. In Figur 8 ist beispielhaft die Transmission als Funktion der Wellenlänge für das Material Poly IR^{®} 5 gezeigt. Man erkennt, daß die Transmission unterhalb 4000 nm bei ca. 90 % liegt. Eine Fresnel-Linse 64, die aus einem solchen Material hergestellt ist, ist geeignet zur Fokussierung des rückgestreuten Lichts 22.

Durch die erfindungsgemäße Ferndetektionsvorrichtung 28 ist ein Lasersystem bereitgestellt, welches sich stabil und kompakt aufbauen läßt und dabei kostengünstig herstellbar ist. Es läßt sich eine hohe Meßempfindlichkeit von im Einzelschuß besser als 50 ppm x m erhalten. Die erfindungsgemäße Ferndetektionsvorrichtung 28 läßt sich in einem Fluggerät wie beispielsweise einem Hubschrauber einsetzen. Bezüglich der Beleuchtung des Meßfelds durch die Lichtpulse 16 und die Referenz-Lichtpulse 18 über einen Doppelpulsbetrieb erhält man bei einer typischen Reisegeschwindigkeit eines Hubschraubers eine ausreichende Flächenüberlappung. Eine Leitungstrasse läßt sich räumlich lückenlos überwachen.

## Patentansprüche

1. Mobile Ferndetektionsvorrichtung für Methangasansammlungen (20), welche zur Montage an einem Fluggerät (52) vorgesehen ist, umfassend eine Sendereinrichtung (12) mit einer Lichtquelle (30) zur Erzeugung von Licht, dessen Wellenlänge mit der spektralen Signatur von Methan abgestimmt ist, wobei das Licht auf ein Meßfeld (14) richtbar ist und wobei die Lichtquelle (30) Lichtpulse einer ersten Wellenlänge entsprechend einer Absorptionslinie von Methan und Referenzlichtpulse einer zweiten Wellenlänge außerhalb einer,Absorptionslinie bereitstellt, eine Detektoreinrichtung (24) zur Detektion von rückgestreutem Licht (22), und eine Auswertungseinrichtung (26), wobei die von der Lichtquelle (30) erzengte erste ellenlänge zwischen 3200 nm und 3300 nm liegt und wobei, die Lichtquelle (30) einen optischen parametrischen Oszillator (32) mit Seed-Injektion umfaßt, welchem ein einziger in einem Doppelpulsbetrieb betreibbaren Pumplaser (34) zugeordnet ist, welcher in Seed-Injektion betrieben ist, der Abstand von Absorptionslichtpuls und Referenzlichtpuls kleine als 300 µs ist, und wobei der optische parametrische Oszillator (32) an eine Sendeoptik (44) mittels eines Lichtfaserleiters (42) gekoppelt ist.

2. Vorrichtung nach Anspruch 1, **dadurch gekennzeichnet, daß** die Lichtquelle (30) Licht der Wellenlänge 3240 nm oder 3220 nm oder 3249 nm oder 3270 nm oder 3290 nm aussendet.

3. Vorrichtung nach Anspruch 1 oder 2, **dadurch gekennzeichnet, daß** eine Seed-Quelle (36) des optischen parametrischen Oszillators (32) Licht einer Seed-Wellenlänge λₛ⁻¹ = λₚ⁻¹ - λₗ⁻¹ erzeugt, wobei λₚ die Wellenlänge des Pumplasers (34) des optischen parametrischen Oszillators (32) ist und λₗ eine Absprptionswellenlänge von Methan.

4. Vorrichtung nach Anspruch 3, **dadurch gekennzeichnet, daß** λₗ die Idler-Wellenlänge ist.

5. Vorrichtung nach einem der vorangehenden Ansprüche, **dadurch gekennzeichnet, daß** der Lichtfaserleiter (42) Saphirfasern aufweist.

6. Vorrichtung nach einem der vorangehenden Ansprüche, **dadurch gekennzeichnet, daß** der Pumplaser (34) ein gütegeschalteter Festkörperlaser ist.

7. Vorrichtung nach einem der vorangehenden Ansprüche, **dadurch gekennzeichnet, daß** eine Lichtpulsfolge (50) erzeugbar ist.

8. Vorrichtung nach Anspruch 7, **dadurch gekennzeichnet, daß** der zeitliche Abstand eines Absorptionslichtpulses mit einer Absorptionswellenlänge und eines Referenzlichtpulses mit einer Nichtabsorptionswellenlänge so gewählt ist, daß unter Berücksichtigung einer Bewegungsgeschwindigkeit eines Trägers für die Vorrichtung ein räumlicher Überlapp zwischen dem vom Absorptionslichtpuls beleuchteten Meßfeld und dem vom Referenzlichtpuls beleuchteten Meßfeld vorliegt.

9. Vorrichtung nach einem der vorangehenden Ansprüche, **dadurch gekennzeichnet, daß** der Pumplaser (34) diodengepumpt ist, wobei zur Erzeugung von Doppelpulsen eine Güteschaltung (40) während eines Diodenpumppulses mindestens zweimal schaltbar ist.

10. Vorrichtung nach einem der vorangehenden Ansprüche, **dadurch gekennzeichnet, daß** die Lichtquelle (30) durchstimmbar ist in einem Wellenlängenbereich um 3240 nm.

11. Vorrichtung nach einem der vorangehenden Ansprüche, **dadurch gekennzeichnet, daß** die spektrale Breite des von der Lichtquelle (30) erzeugten Lichts wesentlich kleiner ist als die Linienbreite der entsprechenden Methanabsorptionslinie.

12. Vorrichtung nach einem der vorangehenden Ansprüche, **dadurch gekennzeichnet, daß** ein Detektor der Detektoreinrichtung gekühlt ist.

13. Vorrichtung nach Anspruch 12, **dadurch gekennzeichnet, daß** der Detektor thermoelektrisch gekühlt ist.

14. Vorrichtung nach einem der vorangehenden Ansprüche, **dadurch gekennzeichnet, daß** die Detektoreinrichtung (24) einen oder mehrere InAs-Detektoren umfaßt.

15. Vorrichtung nach einem der vorangehenden Ansprüche, **dadurch gekennzeichnet, daß** die Detektoreinrichtung (24) ein Teleskop umfaßt.

16. Vorrichtung nach einem der Ansprüche 1 bis 14, **dadurch gekennzeichnet, daß** die Detektoreinrichtung (24) zur Fokussierung eine Fresnel-Linse (64) umfaßt.

17. Vorrichtung nach einem der vorangehenden Ansprüche, **dadurch gekennzeichnet, daß** eine Entfernungsmeßeinrichtung vorgesehen ist.

18. Vorrichtung nach einem der vorangehenden Ansprüche, **dadurch gekennzeichnet, daß** eine zeitaufgelöste Messung bezüglich der Laufzeit von Lichtpulsen zwischen Aussendung und Empfang von entsprechenden Reflexionslichtpulsen vorgesehen ist.

19. Ferndetektionsverfahren für Methangasansammlungen, bei dem Lichtpulse von einem Fluggerät auf ein Meßfeld gerichtet werden, deren Wellenlänge mit der spektralen Signatur von Methan abgestimmt ist, und rückgestreutes Licht an dem Fluggerät detektiert wird, wobei die Lichtquelle Lichtpulse einer ersten Wellenlänge entsprechend einer Absorbtionslinie von Methan und Referenzlichtpulse einer zweiten Wellenlänge außerhalb einer Absorptionslinie bereitstellt, und wobei die Weilenlänge der Absorptionslichtpulse bei 3240 nm oder 3220 nm oder 3249 nm oder 3270 nm oder 3290 nm liegt, das Sendelicht mittels eines geseedeten optischen parametrischen Oszillators erzeugt wird, welcher durch einen einzigen geseedeten Pumplaser gepumpt wird, wobei ein Referenzlichtpuls einer Nichtabsorptionswellenlänge in einem Abstand zu dem Absorptionslichtpuls ausgesandt wird und der Pumplaser in Doppelpulsbetrieb für Absorptionslichtpulse und Referenzlichtpulse betrieben wird und der optische parametrische Oszillator an eine Sendeoptik mittels eines Lichtfaserleiters gekoppelt wird.

## Claims

1. Mobile remote detection device for methane gas accumulations (20), which is provided for assembly on an aircraft (52), comprising an emitter device (12) with a light source (30) to generate light, the wavelength of which is tuned with the spectral signature of methane, wherein the light is directable onto a measuring field (14) and wherein the light source (30) provides light pulses of a first wavelength corresponding to a methane absorption line and reference light pulses of a second wavelength outside an absorption line, a detector device (24) for the detection of backscattered light (22), and an evaluation device (26), wherein the first wavelength generated by the light source (30) lies between 3200 nm and 3300 nm, and wherein the light source (30) comprises an optical parametric oscillator (32) with injection seeding, which is associated with a single pump laser (34) being operatable in a double-pulse mode and operated in injection seeding mode, the interval between the absorption light pulse and the reference light pulse being less than 300 µs, and wherein the optical parametric oscillator (32) is coupled to an optical emitter system (44) by means of a fibre optic light guide (42).

2. Device according to Claim 1, **characterised in that** the light source (30) emits light in the wavelength of 3240 nm or 3220 nm or 3249 nm or 3270 nm or 3290 nm.

3. Device according to Claim 1 or 2, **characterised in that** a seed source (36) of the optical parametric oscillator (32) generates light with a seed wavelength of λₛ⁻¹ = λₚ⁻¹ - λᵢ⁻¹, wherein λₚ is the wavelength of the pump laser (34) of the optical parametric oscillator (32) and λᵢ is a methane absorption wavelength.

4. Device according to Claim 3, **characterised in that** λᵢ is the idler wavelength.

5. Device according to one of the preceding claims, **characterised in that** the fibre optic light guide (42) comprises sapphire fibres.

6. Device according to one of the preceding claims, **characterised in that** the pump laser (34) is a Q-switched solid state laser.

7. Device according to one of the preceding claims, **characterised in that** a light pulse sequence (50) is generateable.

8. Device according to Claim 7, **characterised in that** the time interval between an absorption light pulse with an absorption wavelength and a reference light pulse with a non-absorption wavelength is selected so that, taking into consideration a movement speed of a carrier for the device, there is a spatial overlap between the measuring field illuminated by the absorption light pulse and the measuring field illuminated by the reference light pulse.

9. Device according to one of the preceding claims, **characterised in that** the pulse laser (34) is diode-pumped, wherein to generate double pulses a Q-switching circuit (40) is switchable at least twice during a diode pump pulse.

10. Device according to one of the preceding claims, **characterised in that** the light source (30) is tunable in a wavelength range about 3240 nm.

11. Device according to one of the preceding claims, **characterised in that** the spectral width of the light generated by the light source (30) is substantially narrower than the line width of the corresponding methane absorption line.

12. Device according to one of the preceding claims, **characterised in that** the detector of the detector device is cooled.

13. Device according to Claim 12, **characterised in that** the detector is cooled thermoelectrically.

14. Device according to one of the preceding claims, **characterised in that** the detector device (24) comprises one or more InAs detectors.

15. Device according to one of the preceding claims, **characterised in that** the detector device (24) comprises a telescope.

16. Device according to one of Claims 1 to 14, **characterised in that** the detector device (24) comprises a Fresnel lens (64) for focussing.

17. Device according to one of the preceding claims, **characterised in that** a distance-measuring system is provided.

18. Device according to one of the preceding claims, **characterised in that** a time-resolved measurement is provided with respect to the transit time of light pulses between emission and receipt of corresponding reflection light pulses.

19. Remote detection method for methane gas accumulations, in which light pulses are directed from an aircraft onto a measuring field, the wavelength of which is tuned with the spectral signature of methane, and backscattered light is detected, wherein the light source provides light pulses of a first wavelength corresponding to a methane absorption line and reference light pulses of a second wavelength outside an absorption line, and wherein the wavelength of the absorption light pulses lies at 3240 nm or 3220 nm or 3249 nm or 3270 nm or 3290 nm, the transmission light being generated by means of a seeded optical parametric oscillator, which is pumped by a single seeded pump laser, a reference light pulse with a non-absorption wavelength is emitted at an interval from the absorption light pulse and the pump laser is operated in double-pulse mode for absorption light pulses and reference light pulses and the optical parametric oscillator is coupled to an optical emitter system by means of a fibre optic light guide.

## Revendications

1. Système mobile de détection à distance d'accumulations de méthane (20), prévu pour être monté sur un aéronef (52), comprenant un dispositif émetteur (12) avec une source lumineuse (30) pour la génération de lumière dont la longueur d'onde est accordée à la signature spectrale du méthane, la lumière pouvant être dirigée vers un champ de mesure (14) et la source lumineuse (30) délivrant des impulsions lumineuses d'une première longueur d'onde conformément à une ligne d'absorption du méthane et des impulsions lumineuses de référence d'une deuxième longueur d'onde en dehors d'une ligne d'absorption, un dispositif de détection (24) pour la détection de lumière rétrodiffusée (22) et un dispositif d'évaluation (26), la première longueur d'onde générée par la source lumineuse (30) étant comprise entre 3200 nm et 3300 nm, et la source lumineuse (30) comprenant un oscillateur optique paramétrique à ensemencement (32), auquel est associé un unique laser de pompage (34) actionnable dans un mode à double impulsion, commandé en ensemencement, la distance entre l'impulsion lumineuse d'absorption et l'impulsion lumineuse de référence étant inférieure à 300 µs, et l'oscillateur optique paramétrique (32) étant couplé à une optique d'émission (44) au moyen d'un conducteur à fibre optique (42).

2. Système selon la revendication 1, **caractérisé en ce que** la source lumineuse (30) émet une lumière de longueur d'onde de 3240 nm ou 3220 nm ou 3249 nm ou 3270 nm ou 3290 nm.

3. Système selon la revendication 1 ou 2, **caractérisé en ce qu'**une source d'ensemencement (36) de l'oscillateur optique paramétrique (32) génère une lumière d'une longueur d'onde d'ensemencement λₛ⁻¹ = λₚ⁻¹ - λₗ⁻¹, λₚ étant la longueur d'onde du laser de pompage (34) de l'oscillateur optique paramétrique (32) et λₗ une longueur d'onde d'absorption du méthane.

4. Système selon la revendication 3, **caractérisé en ce que** λₗ est la longueur d'onde idler.

5. Système selon l'une des revendications précédentes, **caractérisé en ce que** le conducteur à fibre optique (42) comprend des fibres de saphir.

6. Système selon l'une des revendications précédentes, **caractérisé en ce que** le laser de pompage (34) est un laser solide à mode déclenché.

7. Système selon l'une des revendications précédentes, **caractérisé en ce qu'**une séquence d'impulsions lumineuses (50) peut être générée.

8. Système selon la revendication 7, **caractérisé en ce que** l'intervalle temporel d'une impulsion lumineuse d'absorption avec une longueur d'onde d'absorption et d'une impulsion lumineuse de référence avec une longueur d'onde de non-absorption est sélectionné de telle manière qu'un chevauchement spatial entre le champ de mesure éclairé par l'impulsion lumineuse d'absorption et le champ de mesure éclairé par l'impulsion lumineuse de référence est présenté en tenant compte d'une vitesse de déplacement d'un support pour le système.

9. Système selon l'une des revendications précédentes, **caractérisé en ce que** le laser de pompage (34) est pompé par diode, un déclenchement (40) étant exécutable au moins deux fois pendant une impulsion de pompage par diode pour la génération de doubles impulsions.

10. Système selon l'une des revendications précédentes, **caractérisé en ce que** la source lumineuse (30) peut être accordée dans une gamme de longueur d'onde autour de 3240 nm.

11. Système selon l'une des revendications précédentes, **caractérisé en ce que** la largeur spectrale de la lumière générée par la source lumineuse (30) est sensiblement inférieure à la largeur de la ligne d'absorption de méthane correspondante.

12. Système selon l'une des revendications précédentes, **caractérisé en ce qu'**un détecteur du dispositif de détection est refroidi.

13. Système selon la revendication 12, **caractérisé en ce que** le détecteur est refroidi thermo-électriquement.

14. Système selon l'une des revendications précédentes, **caractérisé en ce que** le dispositif de détection (24) comprend un ou plusieurs détecteurs InAs.

15. Système selon l'une des revendications précédentes, **caractérisé en ce que** le dispositif de détection (24) comprend un télescope.

16. Système selon l'une des revendications 1 à 14, **caractérisé en ce que** le dispositif de détection (24) comprend une lentille de Fresnel (64) pour focalisation.

17. Système selon l'une des revendications précédentes, **caractérisé en ce qu'**un dispositif de mesure de distance est prévu.

18. Système selon l'une des revendications précédentes, **caractérisé en ce qu'**il est prévu une mesure à résolution temporelle de la durée de propagation d'impulsions lumineuses entre l'émission et la réception d'impulsions lumineuses de réflexion correspondantes.

19. Procédé de détection à distance d'accumulations de méthane, où des impulsions lumineuses sont dirigées d'un aéronef vers un champ de mesure dont la longueur d'onde est accordée à la signature spectrale du méthane, et où une lumière rétrodiffusée est détectée sur l'aéronef, la source lumineuse délivrant des impulsions lumineuses d'une première longueur d'onde conformément à une ligne d'absorption du méthane et des impulsions lumineuses de référence d'une deuxième longueurs d'onde en dehors d'une ligne d'absorption, et la longueur d'onde des impulsions lumineuses d'absorption étant de 3240 nm ou 3220 nm ou 3249 nm ou 3270 nm ou 3290 nm, la lumière émise étant générée au moyen d'un oscillateur optique paramétrique à ensemencement, lequel est pompé par un unique laser de pompage à ensemencement, une impulsion lumineuse de référence d'une longueur d'onde de non-absorption étant émise à distance de l'impulsion lumineuse d'absorption et le laser de pompage étant commandé en mode à double impulsion pour des impulsions lumineuses d'absorption et des impulsions lumineuses de référence, et l'oscillateur optique paramétrique étant couplé à une optique d'émission au moyen d'un conducteur à fibre optique.
